# EUROPEAN PATENT APPLICATION

(11) **EP 4 425 081 A1**
(43) Date of publication of application: **04.09.2024**
(21) Application number: 22894776.8
(22) Date of filing: 15.11.2022
(51) Int. Cl.: F28D 1/053, F28F 9/02, F28D 7/00

(54) **HEAT EXCHANGER, VEHICLE-MOUNTED THERMAL MANAGEMENT SYSTEM, AND ELECTRIC VEHICLE**

(30) Priority: 17.11.2021 CN 202111364704
(71) Applicant: Huawei Technologies Co., Ltd., Shenzhen, Guangdong 518129 (CN)
(72) Inventor: YUAN, Zhi, Shenzhen, Guangdong 518129 (CN); LI, Quanming, Shenzhen, Guangdong 518129 (CN); LI, Haipeng, Shenzhen, Guangdong 518129 (CN)
(74) Representative: Körber, Martin Hans
(86) International application number: PCT/CN2022/131963
(87) International publication number: WO 2023/088243

(57) **Abstract**

This application provides a heat exchanger, a vehicle-mounted heat management system, and an electric vehicle, to improve heat exchange efficiency of the heat exchanger and simplify a structure of the heat exchanger. The heat exchanger includes a first flow collector, a second flow collector, and a heat exchange core. The first flow collector includes a first chamber and a second chamber. The first chamber is provided with a plurality of first flow distribution openings. The second chamber is provided with a plurality of second flow distribution openings. The second flow collector includes a third chamber and a fourth chamber. The third chamber is provided with a plurality of third flow distribution openings. The fourth chamber is provided with a plurality of fourth flow distribution openings. The heat exchange core includes a plurality of heat exchange units. The plurality of heat exchange units are disposed between the first flow collector and the second flow collector. The heat exchange unit includes a fin and a flow guiding member. The flow guiding member forms a first flow channel and a second flow channel. Two ends of the first flow channel are respectively connected to the first flow distribution opening and the third flow distribution opening. Two ends of the second flow channel are respectively connected to the second flow distribution opening and the fourth flow distribution opening.

## Description

### CROSS-REFERENCE TO RELATED APPLICATIONS

This application claims priority to Chinese Patent Application No. 202111364704.3, filed with the China National Intellectual Property Administration on November 17, 2021 and entitled "HEAT EXCHANGER, VEHICLE-MOUNTED HEAT MANAGEMENT SYSTEM, AND ELECTRIC VEHICLE", which is incorporated herein by reference in its entirety.

### TECHNICAL FIELD

This application relates to the field of heat exchange device technologies, and in particular, to a heat exchanger, a vehicle-mounted heat management system, and an electric vehicle.

### BACKGROUND

An evaporator and a condenser of a conventional vehicle-mounted heat management system usually use two-fluid heat exchangers, such as a plate heat exchanger or a parallel flow heat exchanger. These heat exchangers can only exchange heat between two media. For example, the plate heat exchanger can exchange heat between a refrigerant and water, and the parallel flow heat exchanger can exchange heat between air and water or between air and a refrigerant. Due to this functional limitation, a plurality of heat exchangers need to be disposed in the heat management system, and a pipeline connection is complex. As a result, a size of the system is large.

For the foregoing problem, currently, in some heat management systems, a three-fluid heat exchanger is used to replace the two-fluid heat exchanger. The three-fluid heat exchanger can exchange heat between three fluids: a refrigerant, water, and air. Therefore, a connection pipeline of the heat management system can be simplified, and an overall size of the heat management system can be reduced. However, an existing three-fluid heat exchanger usually has a complex structure and low heat exchange efficiency. This is not conducive to improving overall heat exchange performance of the heat management system.

### SUMMARY

This application provides a heat exchanger, a vehicle-mounted heat management system, and an electric vehicle, to improve heat exchange efficiency of the heat exchanger and simplify a structure of the heat exchanger.

According to a first aspect, this application provides a heat exchanger. The heat exchanger may include a first flow collector, a second flow collector, and a heat exchange core. The first flow collector may include a first chamber and a second chamber. The first chamber may be in thermally conductive contact with the second chamber. The first flow collector is provided with a plurality of first flow distribution openings. The second chamber is provided with a plurality of second flow distribution openings. The second flow collector may include a third chamber and a fourth chamber. The third chamber may be in thermally conductive contact with the fourth chamber. The third chamber is provided with a plurality of third flow distribution openings. The fourth chamber is provided with a plurality of fourth flow distribution openings. The heat exchange core may include a plurality of heat exchange units disposed between the first flow collector and the second flow collector. The plurality of heat exchange units are disposed in parallel along a first direction. Each heat exchange unit may include one or more fins and one or more flow guiding members. The one or more flow guiding members may form at least one first flow channel and at least one second flow channel. One end of the first flow channel may be connected to the first flow distribution opening, and the other end of the first flow channel may be connected to the third flow distribution opening, so that the first chamber communicates with the third chamber. One end of the second flow channel may be connected to the second flow distribution opening, and the other end of the second flow channel may be connected to the fourth flow distribution opening, so that the second chamber communicates with the fourth chamber. The fin may have an air intake side and an air exhaust side. The air intake side and the air exhaust side of the fin are disposed opposite to each other along a second direction. The second direction and the first direction are provided at an included angle.

In the heat exchanger provided in this application, a simple structure design is used, so that the first flow channel, the second flow channel, and the fin of the heat exchange core can be in thermally conductive contact with each other. In this way, heat is exchanged between any two of three fluids flowing through the heat exchange core. In addition, a design manner in which the first chamber is in thermally conductive contact with the second chamber, and the third chamber is in thermally conductive contact with the fourth chamber is used, so that fluids in the first flow collector and the second flow collector can also exchange heat with each other. This helps increase heat exchange duration in the heat exchanger, so that heat exchange efficiency of the heat exchanger can be improved.

In some possible implementation solutions, the end that is of the first flow channel and that is connected to the first flow distribution opening may be a liquid inlet port of the first flow channel, and the end that is of the first flow channel and that is connected to the third flow distribution opening may be a liquid outlet port of the first flow channel. The end that is of the second flow channel and that is connected to the fourth flow distribution opening may be a liquid inlet port of the second flow channel, and the end that is of the second flow channel and that is connected to the second flow distribution opening may be a liquid outlet port of the second flow channel. In this way, when the heat exchanger works, a fluid in the first flow channel can flow opposite to a fluid in the second flow channel, to form convection in the heat exchange core. This improves the heat exchange efficiency.

In some possible implementation solutions, each heat exchange unit may include three flow guiding members and one fin. The three flow guiding members may respectively form one first flow channel and two second flow channels. Along the first direction, the first flow channel may be located between the two second flow channels, and the fin may be located on a side that is of one of the second flow channels and that is away from the first flow channel.

For example, two ends of the two flow guiding members configured to form the second flow channels may be separately provided with bent parts, and each bent part may be bent toward a side away from the first flow channel, so that end parts of the three flow guiding members of the heat exchange unit can be spaced from each other and connected to chambers corresponding to the two ends.

In some possible implementation solutions, each heat exchange unit may include two flow guiding members and one fin. The two flow guiding members may respectively form one first flow channel and one second flow channel. The first flow channel, the second flow channel, and the fin are disposed in parallel along the first direction.

In some possible implementation solutions, each heat exchange unit may include two flow guiding members and two fins. The two flow guiding members may respectively form one first flow channel and one second flow channel. Along the first direction, the first flow channel may be located between the two fins, and the second flow channel may be located on a side that is of one of the fins and that is away from the first flow channel.

In some possible implementation solutions, each heat exchange unit may include two flow guiding members and one fin. The two flow guiding members may respectively form one first flow channel and one second flow channel. The two flow guiding members may be disposed in parallel along the second direction to form a flow guiding component. The flow guiding component and the fin may be disposed in parallel along the first direction.

In some possible implementation solutions, there is a first path, a second path, and a third path in the first flow channel. An arrangement direction of the first flow collector and the second flow collector is a third direction. The first path and the second path may be separately disposed along the third direction. The first path is connected to the first flow distribution opening. The second path is connected to the third flow distribution opening. The third path is disposed along the second direction. Two ends of the third path are respectively connected to the first path and the second path. In this design, a fluid in the first chamber enters the first path through the first flow distribution opening, enters the second path through the third path in the first path, and finally flows into the third chamber through the second path. When the fluid flows through the third path along the second direction, air may flow through the fin along a reverse direction at the same time. In this way, the fluid in the third path and the air can form convection. This improves the heat exchange efficiency.

For example, there may be a plurality of third paths, to improve flow efficiency of the fluid in the first flow channel. During specific disposition, the plurality of third paths may be disposed in parallel along the third direction.

In some possible implementation solutions, there is a fourth path, a fifth path, and a sixth path in the second flow channel. The fourth path and the fifth path may be separately disposed along the third direction. The fourth path is connected to the second flow distribution opening. The fifth path is connected to the fourth flow distribution opening. The sixth path is disposed along the second direction. Two ends of the sixth path are respectively connected to the fourth path and the fifth path. In this design, a fluid in the second chamber enters the fourth path through the second flow distribution opening, enters the fifth path through the sixth path in the fourth path, and finally flows into the fourth chamber through the fifth path. When the fluid flows through the sixth path along the second direction, air may flow through the fin along a reverse direction at the same time. In this way, the fluid in the sixth path and the air can form convection. This improves the heat exchange efficiency.

For example, there may be a plurality of sixth paths, to improve flow efficiency of the fluid in the second flow channel. During specific disposition, the plurality of sixth paths may be disposed in parallel along the third direction.

In some possible implementation solutions, each heat exchange unit may include one flow guiding member and one fin. The flow guiding member and the fin are disposed in parallel along the first direction. One or more division plates may be disposed in the flow guiding member. The division plates may divide the flow guiding member into at least one first flow channel and at least one second flow channel. The at least one first flow channel and the at least one second flow channel are alternately arranged along the second direction. In this solution, good heat exchange effect of fluids in the first flow channel and the second flow channel can be achieved. This helps improve heat exchange performance of the heat exchanger.

In some possible implementation solutions, the first chamber, the second chamber, the third chamber, and the fourth chamber may be separately provided with an opening configured to communicate with the outside. In this way, an external fluid can be introduced, through openings of the first chamber and the third chamber, into a flow path, in the heat exchanger, formed by the first chamber, the first flow channel, and the third chamber, and an external fluid can be introduced, through openings of the second chamber and the fourth chamber, into another flow path, in the heat exchanger, formed by the second chamber, the second flow channel, and the fourth chamber, to exchange heat in the heat exchanger.

In some possible implementation solutions, one of the first chamber and the third chamber is provided with two openings configured to communicate with the outside, and one of the second chamber and the fourth chamber is provided with two openings configured to communicate with the outside. An example in which the first chamber and the fourth chamber are separately provided with two openings is used. After entering the third chamber through the first flow channel, a fluid that enters the first chamber from the outside returns to the first chamber through the first flow channel again, and flows out of the heat exchanger from the first chamber. Similarly, after entering the second chamber through the second flow channel, a fluid that enters the fourth chamber from the outside also returns to the fourth chamber through the second flow channel again, and flows out of the heat exchanger from the fourth chamber. It can be seen that operations of two processes of the two fluids can be implemented in the heat exchanger, so that the three fluids in the heat exchanger can exchange heat more fully. This improves the heat exchange performance of the heat exchanger.

To avoid a mix of a fluid that does not exchange heat and a fluid that has exchanged heat from affecting the heat exchange efficiency, during specific disposition, a first baffle plate may be disposed in a chamber that is one of the first chamber and the third chamber and that is provided with two openings. The first baffle plate may divide the first chamber or the third chamber into two first sub-chambers. The two openings of the first chamber or the third chamber are respectively configured for the two first sub-chambers to communicate with the outside.

Similarly, a second baffle plate may be disposed in a chamber that is one of the second chamber and the fourth chamber and that is provided with two openings. The second baffle plate may divide the second chamber or the fourth chamber into two second sub-chambers. The two openings of the second chamber or the fourth chamber are respectively configured for the two second sub-chambers to communicate with the outside.

In some possible implementation solutions, the first chamber may be disposed in the second chamber. The second chamber has a first side wall disposed toward the second flow collector. The first side wall may be provided with a first through hole at a position corresponding to the first flow channel. One end of the first flow channel may pass through the first through hole and be connected to the first flow distribution opening. The third chamber may be disposed in the fourth chamber. The fourth chamber may have a second side wall disposed toward the first flow collector. The second side wall may be provided with a second through hole at a position corresponding to the first flow channel. The other end of the first flow channel may pass through the second through hole and be connected to the third flow distribution opening.

To avoid the first chamber from blocking the second flow distribution opening, there may be a specific gap between an outer wall of the first chamber and the first side wall, so that the second flow distribution opening communicates with an entire inner chamber of the second chamber through the gap. This reduces resistance of a fluid to enter and flow out of the second chamber through the second flow distribution opening. Similarly, there may also be a specific gap between an outer wall of the third chamber and the second side wall, to avoid the first chamber from blocking a second opening.

In some possible implementation solutions, the first chamber and the second chamber may be disposed in parallel along the second direction, and the outer wall of the first chamber is in contact with an outer wall of the second chamber, so that a fluid in the first chamber can exchange heat with a fluid in the second chamber. The third chamber and the fourth chamber may be disposed in parallel along the second direction, and outer walls of the third chamber and the fourth chamber are also in contact with each other, so that a fluid in the third chamber can exchange heat with a fluid in the fourth chamber.

During specific disposition, along the third direction, the first chamber and the fourth chamber may be disposed opposite to each other, and the second chamber and the third chamber may be disposed opposite to each other. When the fluid in the first flow channel flows from the first chamber to the third chamber along the third direction, because positions of the third chamber and the first chamber are staggered, the fluid in the first flow channel also has a trend of flowing along the second direction. Similarly, when the fluid in the second flow channel flows from the fourth chamber to the second chamber along the third direction, because positions of the second chamber and the fourth chamber are staggered, the fluid in the second flow channel also has a trend of flowing along the second direction. In this way, fluids in the first flow channel and the second flow channel can form convection with air flowing through the fin. This can improve heat exchange efficiency of the three fluids in the heat exchanger.

In some possible implementation solutions, two ends of the flow guiding member configured to form the first flow channel may be respectively welded to the first flow distribution opening and the third flow distribution opening, to improve sealing performance when the first flow channel is connected to the first chamber and the third chamber. Similarly, two ends of the flow guiding member configured to form the second flow channel may be respectively welded to the second flow distribution opening and the fourth flow distribution opening, to improve sealing performance when the second flow channel is connected to the second chamber and the fourth chamber.

In some possible implementation solutions, the first flow channel may be specifically a refrigerant flow channel, and the second flow channel may be specifically a water flow channel.

According to a second aspect, this application further provides a vehicle-mounted heat management system. The vehicle-mounted heat management system may include a compressor, an expansion valve, and the heat exchanger in any possible implementation solution of the first aspect. There may be two heat exchangers, which are respectively a first heat exchanger and a second heat exchanger. Each heat exchanger may include a first flow path formed by the first chamber, the first flow channel, and the third chamber, and a second flow path formed by the second chamber, the second flow channel, and the fourth chamber. During specific disposition, the compressor, a first flow path of the first heat exchanger, the expansion valve, and a first flow path of the second heat exchanger may be sequentially connected to form a circulation loop. A passenger compartment of an electric vehicle has an internal air intake vent and an internal air exhaust vent. An air intake side of a fin of the first heat exchanger communicates with the internal air intake vent. An air exhaust side of the fin of the first heat exchanger communicates with the internal air exhaust vent. An air intake side of a fin of the second heat exchanger communicates with the internal air intake vent. An air exhaust side of the fin of the second heat exchanger communicates with the internal air exhaust vent. The vehicle-mounted heat management system provided in this application has high heat exchange efficiency and a simple structure.

In some possible implementation solutions, the vehicle-mounted heat management system may further include a first circulation pump. The electric vehicle may include a battery pack. The battery pack has a first heat dissipation path. The first circulation pump, the first heat dissipation path, and a second flow path of the second heat exchanger may be sequentially connected to form a circulation loop. The circulation loop may be used to dissipate heat for the battery pack.

In some possible implementation solutions, the vehicle-mounted heat management system may further include a second circulation pump. The electric vehicle may include a power assembly. The power assembly has a second heat dissipation path. The second circulation pump, the second heat dissipation path, and the second flow path of the second heat exchanger may be sequentially connected to form a circulation loop. The circulation loop may be used to dissipate heat for the power assembly.

In some possible implementation solutions, the passenger compartment of the electric vehicle may further have an external air intake vent. The air intake side of the fin of the first heat exchanger and the air intake side of the fin of the second heat exchanger may further separately communicate with the external air intake vent, so that external fresh air is introduced into the passenger compartment after exchanging heat in the first heat exchanger or the second heat exchanger.

According to a third aspect, this application further provides an electric vehicle. The electric vehicle may include the vehicle-mounted heat management system in any possible implementation solution of the second aspect. The vehicle-mounted heat management system is capable of being configured to heat or cool a passenger compartment of the electric vehicle.

### BRIEF DESCRIPTION OF DRAWINGS

FIG. 1 is a schematic diagram of a structure of a heat exchanger according to an embodiment of this application;
FIG. 2 is a schematic exploded view of a part of the heat exchanger 1 shown in FIG. 1;
FIG. 3 is a partial sectional view of the heat exchanger shown in FIG. 1;
FIG. 4 is a schematic diagram of a structure of a heat exchange unit according to an embodiment of this application;
FIG. 5 is a schematic exploded view of the heat exchange unit shown in FIG. 4;
FIG. 6 is a schematic diagram of a structure of another heat exchanger according to an embodiment of this application;
FIG. 7 is a schematic exploded view of a part of the heat exchanger shown in FIG. 6;
FIG. 8 is a schematic diagram of a structure of another heat exchanger according to an embodiment of this application;
FIG. 9 is a schematic exploded view of a part of the heat exchanger shown in FIG. 8;
FIG. 10 is a schematic diagram of a structure of another heat exchanger according to an embodiment of this application;
FIG. 11 is a schematic diagram of a structure of another heat exchanger according to an embodiment of this application;
FIG. 12 is a schematic exploded view of a part of the heat exchanger shown in FIG. 11;
FIG. 13 is a schematic diagram of a structure of another heat exchanger according to an embodiment of this application;
FIG. 14 is a schematic diagram of a structure of another heat exchanger according to an embodiment of this application;
FIG. 15 is a schematic exploded view of a part of the heat exchanger shown in FIG. 14;
FIG. 16 is a schematic diagram of a structure of a vehicle-mounted heat management system according to an embodiment of this application; and
FIG. 17 is a schematic diagram of a structure of an electric vehicle according to an embodiment of this application.

Reference numerals:
1: heat exchanger; 10: first flow collector; 20: second flow collector; 30: heat exchange core; 11: first chamber; 12: second chamber;
21: third chamber; 22: fourth chamber; 31: heat exchange unit; 311: fin; 312: flow guiding member; 3121: first flow channel;
3122: second flow channel; 111: first opening; 112: first flow distribution opening; 211: third opening; 121: second opening;
122: second flow distribution opening; 221: fourth opening; 123: first housing; 124: first side wall; 125: first sealing ring;
223: second housing; 1241: first through hole; 224: second sealing ring; 1111: first extension tube;
1112: third sealing ring; 2111: second extension tube; 2231: fourth through hole; 2112: fourth sealing ring; 3123: division plate;
213: first baffle plate; 214a, 214b: first sub-chamber; 126: second baffle plate; 127a, 127b: second sub-chamber;
100: vehicle-mounted heat management system; 200: power assembly; 300: battery pack; 2: compressor; 3: expansion valve;
1a: first heat exchanger; 1b: second heat exchanger; 4: air supply channel; 41: internal air intake vent; 42: internal air exhaust vent;
43: fan; 44: external air intake vent; 441: first damper; 45: first gap; 451: first flow guiding plate;
46: second gap; 461: second flow guiding plate; 5: nine-way valve; 6: first circulation pump; 7: second circulation pump;
110: first heat dissipation path; 120: second heat dissipation path; 8: heat sink.

### DESCRIPTION OF EMBODIMENTS

To make objectives, technical solutions, and advantages of this application clearer, the following further describes this application in detail with reference to the accompanying drawings.

In recent years, environmental pollution and energy shortage have accelerated development and utilization of green renewable energy. An electric vehicle has become a research focus in the automobile industry because of advantages such as low pollution, low noise, and high energy efficiency. Compared with a conventional fuel vehicle, a heat management system of the electric vehicle needs to consider heat management of a battery pack, an electric drive module, and a computing module. Complexity of the entire system is increasingly high. A vehicle-mounted heat management system usually includes a refrigerant loop, a battery liquid cooling loop, and a motor liquid cooling loop. A function of the vehicle-mounted heat management system is to control a plurality of working substances to exchange heat with each other, so that temperatures of controlled objects such as a passenger compartment, the battery pack, and a motor of the vehicle are within a target range. A typical vehicle-mounted heat management system usually needs to use a plurality of heat exchangers, for example, a plate heat exchanger for exchanging heat between a refrigerant and water, and a parallel flow heat exchanger for exchanging heat between air and water or between air and a refrigerant.

An existing vehicle-mounted heat management system usually uses a two-fluid heat exchanger, such as a plate heat exchanger or a parallel flow heat exchanger. These heat exchangers can only exchange heat between two media. For example, the plate heat exchanger can exchange heat between a refrigerant and water, and the parallel flow heat exchanger can exchange heat between air and water or between air and a refrigerant. Due to a functional limitation of the two-fluid heat exchanger, a plurality of heat exchangers need to be disposed in the entire system to ensure a normal operation of each loop. As a result, pipelines of the system are complex, a size is large, and there is great difficulty in arranging the heat exchanger in an entire vehicle.

In view of this, embodiments of this application provide a heat exchanger that can be configured to exchange heat between three fluids, namely, a three-fluid heat exchanger. The heat exchanger is used, so that a quantity of heat exchangers in a vehicle-mounted heat management system can be reduced, a connection pipeline of the system can be simplified, and an overall size of the vehicle-mounted heat management system can be reduced. This reduces difficulty in arranging the heat exchanger in an entire vehicle. The following describes in detail the heat exchanger provided in embodiments of this application with reference to the accompanying drawings.

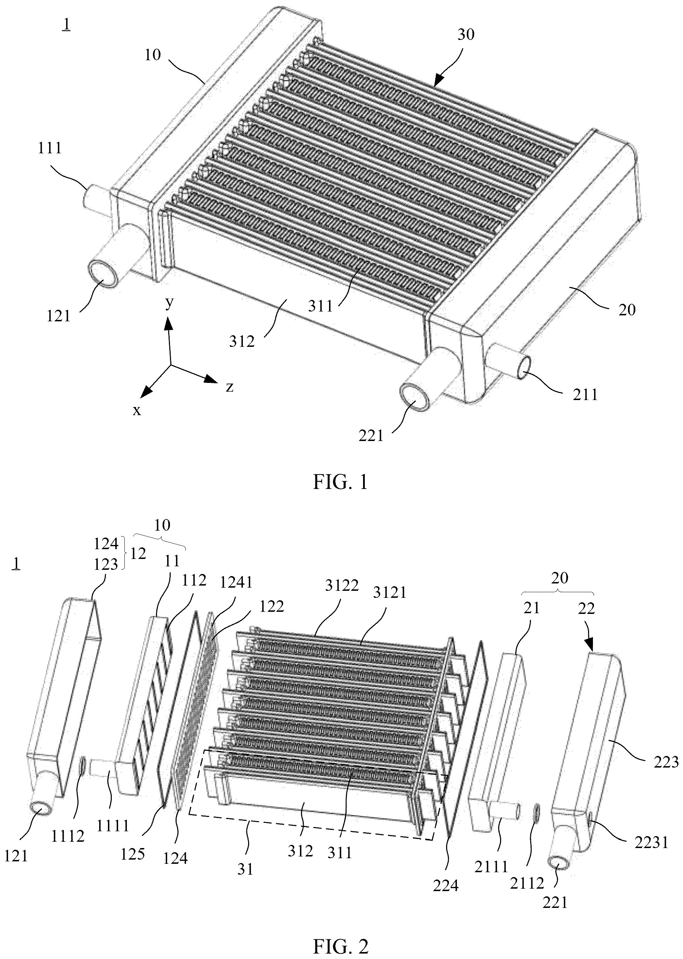

First, refer to FIG. 1 and FIG. 2 together. FIG. 1 is a schematic diagram of a structure of a heat exchanger according to an embodiment of this application. FIG. 2 is a schematic exploded view of a part of the heat exchanger 1 shown in FIG. 1. In this embodiment of this application, the heat exchanger 1 may include a first flow collector 10, a second flow collector 20, and a heat exchange core 30. The first flow collector 10 and the second flow collector 20 are spaced from each other. The first flow collector 10 may include a first chamber 11 and a second chamber 12 that are isolated from each other. The second flow collector 20 may include a third chamber 21 and a fourth chamber 22 that are isolated from each other. The first chamber 11, the second chamber 12, the third chamber 21, and the fourth chamber 22 may be separately configured for temporary storage for a fluid. The heat exchange core 30 may be located between the first flow collector 10 and the second flow collector 20. The first chamber 11 may communicate with the third chamber 21, and the second chamber 12 may communicate with the fourth chamber 22 by using the heat exchange core 30.

During specific implementation, the first flow collector 10 and the second flow collector 20 may be disposed in parallel, or may be disposed in an included angle. This is not limited in this application. In the embodiment shown in FIG. 1, an example in which the first flow collector 10 and the second flow collector 20 are parallel to each other is used for description. The heat exchange core 30 may include a plurality of heat exchange units 31. The plurality of heat exchange units 31 may be disposed in parallel between the first flow collector 10 and the second flow collector 20. An arrangement direction of the plurality of heat exchange units 31 is defined as a first direction (an x direction). For example, when the first flow collector 10 and the second flow collector 20 are disposed in parallel, the first direction x may also be approximately parallel to disposition directions of the first flow collector 10 and the second flow collector 20.

In this embodiment of this application, each heat exchange unit 31 may include at least one fin 311. The fin 311 may be provided with a plurality of airflow channels. The fin 311 has an air intake side and an air exhaust side. When the heat exchanger 1 works, air may enter each airflow channel from the air intake side of the fin 311, and then be discharged from the air exhaust side. During specific disposition, the air intake side and the air exhaust side of the fin 311 may be disposed opposite to each other along a second direction (a y direction). The second direction y and the first direction x may be provided at an included angle. For example, in the embodiment shown in FIG. 1, the second direction y and the first direction x may be perpendicular to each other. In addition, when the first flow collector 10 and the second flow collector 20 are disposed in parallel, an arrangement direction of the first flow collector 10 and the second flow collector 20 is defined as a third direction (a z direction). In this embodiment, the first direction x, the second direction y, and the third direction z may be perpendicular to each other.

In addition, each heat exchange unit 31 may further include at least one flow guiding member 312. The at least one flow guiding member 312 may be configured to form a first flow channel 3121 and a second flow channel 3122 that are isolated from each other. The first flow channel 3121 and the second flow channel 3122 may be respectively configured for different fluids to flow. In this way, the heat exchange core 30 can allow three different fluids to pass through at the same time in cooperation with air flowing through the airflow channels of the fin 311. For example, the first flow channel 3121 may be configured for a refrigerant to flow, and the second flow channel 3122 may be configured for water to flow; or the first flow channel 3121 may be configured for water to flow, and the second flow channel 3122 may be configured for a refrigerant to flow.

In each heat exchange unit, the first flow channel 3121, the second flow channel 3122, and the fins 311 may be arranged according to a specific rule, so that the first flow channel 3121 and the second flow channel 3122, the second flow channel 3122 and the fin 311, and the first flow channel 3121 and the fin 311 can be directly or indirectly in thermally conductive contact with each other. In addition, for the entire heat exchange core 30, flow channels in adjacent heat exchange units 31 can also be in thermally conductive contact with each other. In this way, three fluids in the first flow channel 3121, the second flow channel 3122, and the airflow channels of the fin 311 can exchange heat in the heat exchange core 30.

Still refer to FIG. 1 and FIG. 2. The first chamber 11 may be provided with a plurality of first flow distribution openings 112. The plurality of first flow distribution openings 112 may be respectively connected to one end of the first flow channel 3121 of each heat exchange unit 31. The third chamber 21 may be provided with a plurality of third flow distribution openings (not shown in the figure). The plurality of third flow distribution openings may be respectively connected to the other end of the first flow channel 3121 of each heat exchange unit 31. In other words, the first chamber 11 may communicate with the third chamber 21 through a plurality of first flow channels 3121, and the first chamber 11, the first flow channels 3121, and the third chamber 21 may form a first flow path of the entire heat exchanger 1.

The first flow path may be provided with two openings that can communicate with the outside. In some embodiments, the two openings may be respectively provided on the first chamber 11 and the third chamber 21. For ease of differentiation, an opening for the first chamber 11 to communicate with the outside is referred to as a first opening 111, and an opening for the third chamber 21 to communicate with the outside is referred to as a third opening 211 in the following descriptions. The first flow path may be connected to a corresponding circulation loop through the first opening 111 and the third opening 211. For example, when the first flow channel 3121 is configured for a refrigerant to flow, the circulation loop is a refrigerant loop.

Similarly, the second chamber 12 may be provided with a plurality of second flow distribution openings 122. The plurality of second flow distribution openings 122 may be respectively connected to one end of the second flow channel 3122 of each heat exchange unit 31. The fourth chamber 22 may be provided with a plurality of fourth flow distribution openings (not shown in the figure). The plurality of fourth flow distribution openings may be respectively connected to the other end of the second flow channel 3122 of each heat exchange unit 31. In other words, the second chamber 12 may communicate with the fourth chamber 22 through a plurality of second flow channels 3122, and the second chamber 12, the second flow channels 3122, and the fourth chamber 22 may form a second flow path of the entire heat exchanger 1.

The second flow path may also be provided with two openings that can communicate with the outside. In some embodiments, the two openings may be respectively provided on the second chamber 12 and the fourth chamber 22. For ease of differentiation, an opening for the second chamber 12 to communicate with the outside is referred to as a second opening 121, and an opening for the fourth chamber 22 to communicate with the outside is referred to as a fourth opening 221 in the following descriptions. The second flow path may be connected to a corresponding circulation loop through the second opening 121 and the fourth opening 221. For example, when the second flow channel 3122 is configured for water to flow, the circulation loop is a water cooling loop.

It should be noted that, during specific implementation, two ends of the flow guiding member 312 configured to form the first flow channel 3121 may be respectively welded to the first flow distribution opening 112 and the third flow distribution opening, to improve sealing performance when the first flow channel 3121 is connected to the first chamber 11 and the third chamber 21. Similarly, two ends of the flow guiding member 312 configured to form the second flow channel 3122 may be respectively welded to the second flow distribution opening 122 and the fourth flow distribution opening, to improve sealing performance when the second flow channel 3122 is connected to the second chamber 12 and the fourth chamber 22.

In some embodiments, the first opening 111 of the first chamber 11 may be used as an inlet of the first flow path, and the third opening 211 of the third chamber 21 may be used as an outlet of the first flow path. In this case, the end that is of the first flow channel 3121 and that is connected to the first flow distribution opening 112 is a liquid inlet port of the first flow channel 3121, and the end that is of the first flow channel 3121 and that is connected to the third flow distribution opening is a liquid outlet port of the first flow channel 3121. A fluid in the first flow channel 3121 flows from left to right. In addition, the fourth opening 221 of the fourth chamber 22 may be used as an inlet of the second flow path, and the second opening 121 of the second chamber 12 may be used as an outlet of the second flow path. In this case, the end that is of the second flow channel 3122 and that is connected to the fourth flow distribution opening is a liquid inlet port of the second flow channel 3122, and the end that is of the second flow channel 3122 and that is connected to the second flow distribution opening 122 is a liquid outlet port of the second flow channel 3122. A fluid in the second flow channel 3122 flows from right to left. In this way, when the heat exchanger 1 works, the fluid in the first flow channel 3121 flows opposite to the fluid in the second flow channel 3122, to form convection in the heat exchange core 30. This design helps improve heat exchange efficiency of the two fluids and improve overall heat exchange performance of the heat exchanger 1.

Certainly, in some other embodiments, the fluid in the first flow channel 3121 and the fluid in the second flow channel 3122 may alternatively flow along a same direction. For example, when one end that is of the first flow channel 3121 and that is connected to the first flow distribution opening 112 of the first chamber 11 is a liquid inlet port of the first flow channel 3121, and one end that is of the second flow channel 3122 and that is connected to the second flow distribution opening 122 of the second chamber 12 may alternatively be a liquid inlet port of the second flow channel 3122. This may be specifically set based on an actual application scenario of the heat exchanger 1. This is not limited in this application.

It should be noted that, orientation terms such as "left", "right", "up", and "down" used by the heat exchanger in this embodiment of this application are mainly described based on a display orientation of the heat exchanger in FIG. 1, and do not constitute a limitation on an orientation of the heat exchanger in an actual application scenario.

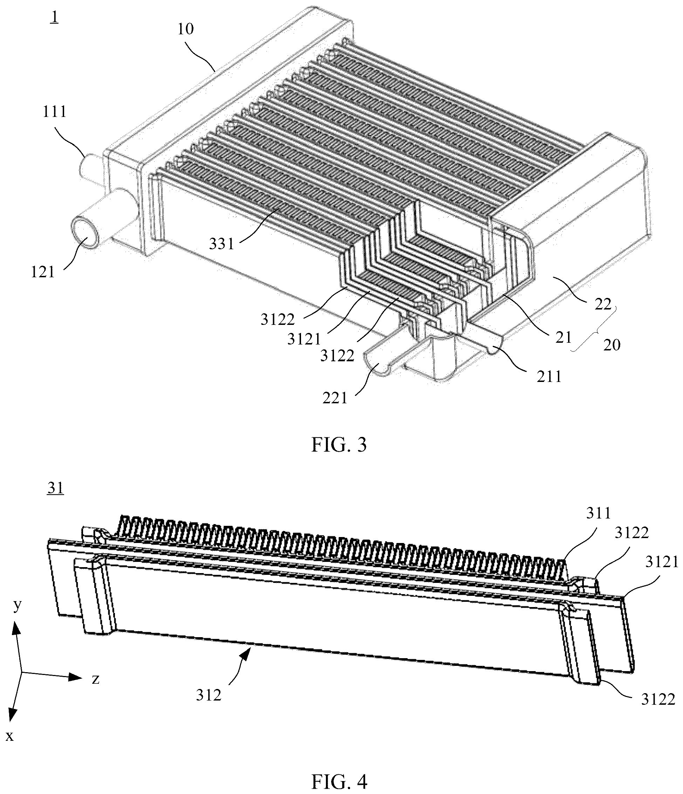

FIG. 3 is a partial sectional view of the heat exchanger shown in FIG. 1. Refer to FIG. 2 and FIG. 3 together. In some embodiments of this application, the first chamber 11 may be disposed inside the second chamber 12. When the two fluids respectively enter the first chamber 11 and the second chamber 12, the entire first chamber 11 may be immersed in the fluid in the second chamber 12. In this way, the first chamber 11 can be in thermally conductive contact with the second chamber 12, and the fluid in the first chamber 11 can exchange heat with the fluid in the second chamber 12. Similarly, the third chamber 21 may also be disposed inside the fourth chamber 22. When the two fluids respectively enter the third chamber 21 and the fourth chamber 22, the third chamber 21 may be immersed in the fluid in the fourth chamber 22. In this way, the third chamber 21 can also be in thermally conductive contact with the fourth chamber 22, and the fluid in the third chamber 21 can also exchange heat with the fluid in the fourth chamber 22. In other words, the two fluids entering the heat exchanger 1 not only can exchange heat with each other in the first flow channel 3121 and the second flow channel 3122, but also can exchange heat with each other in the first flow collector 10 and the second flow collector 20. This extends heat exchange duration of the two fluids and improves heat exchange effect of the heat exchanger.

During specific implementation, the second chamber 12 may include a first housing 123 having an accommodating chamber, and a first side wall 124. The first side wall 124 is disposed toward the second flow collector 20, and the first side wall 124 is detachably connected to the first housing 123, to seal the accommodating chamber of the second chamber 12. To avoid the fluid in the second chamber 12 from leaking, a first sealing ring 125 may be further disposed at a connection position between the first side wall 124 and the first housing 123. The first sealing ring 125 may be squeezed between the first side wall 124 and the first housing 123, to improve sealing effect of the second chamber 12. The first side wall 124 may be respectively provided with a first through hole 1241 at a position corresponding to the first flow channel 3121 of each heat exchange unit 31, so that end parts of the flow guiding member 312 forming the first flow channel 3121 can pass through the first through hole 1241 and be connected to the first flow distribution opening 112.

It may be understood that, the second flow distribution opening 122 provided on the second chamber 12 is also provided on the first side wall 124. When the first chamber 11 is disposed in the second chamber 12, to avoid the first chamber 11 from blocking the second flow distribution opening 122, there may be a specific gap between an outer wall of the first chamber 11 and the first side wall 124, so that the second flow distribution opening 122 communicates with an entire inner chamber of the second chamber 12 through the gap. This reduces resistance of a fluid to enter and flow out of the second chamber 12 through the second flow distribution opening 122, so that heat exchange efficiency of the heat exchanger 1 is improved. Similarly, there may also be a specific gap between an outer wall of the first chamber 11 and a side wall that is of the first housing 123 and that is provided with the second opening 121, to avoid the first chamber 11 from blocking the second opening 121.

The fourth chamber 22 may include a second housing 223 having an accommodating chamber, and a second side wall (not shown in the figure). The second side wall is disposed toward the first flow collector 10, and the second side wall is detachably connected to the second housing 223, to seal the accommodating chamber of the fourth chamber 22. Similarly, to avoid the fluid in the fourth chamber 22 from leaking, a second sealing ring 224 may be disposed at a connection position between the second side wall and the second housing 223. The second sealing ring 224 may be squeezed between the second side wall and the second housing 223, to improve sealing effect of the fourth chamber 22. The second side wall may be respectively provided with a second through hole at a position corresponding to the first flow channel 3121 of each heat exchange unit 31, so that end parts of the flow guiding member 312 forming the first flow channel 3121 can pass through the second through hole and be connected to the third flow distribution opening.

In addition, the fourth flow distribution opening provided on the fourth chamber 22 is provided on the second side wall. When the third chamber 21 is disposed in the fourth chamber 22, to avoid the third chamber 21 from blocking the fourth flow distribution opening, there may be a specific gap between an outer wall of the third chamber 21 and the second side wall, so that the fourth flow distribution opening communicates with an entire inner chamber of the fourth chamber 22 through the gap. This reduces resistance of a fluid to enter and flow out of the fourth chamber 22 through the fourth flow distribution opening, so that the heat exchange efficiency of the heat exchanger 1 is improved. Similarly, there may also be a specific gap between an outer wall of the third chamber 21 and a side wall that is of the second housing 223 and that is provided with the fourth opening 221, to avoid the third chamber 21 from blocking the fourth opening 221.

In addition, to facilitate communication between the first chamber 11 and another component outside the heat exchanger 1, a first extension tube 1111 may be disposed at the first opening 111, the first housing 123 may be provided with a third through hole (not shown in the figure) at a position corresponding to the first extension tube 1111, and the first extension tube 1111 may extend from the third through hole to the outside of the second chamber 12. In this way, the first chamber 11 can be connected to a corresponding circulation loop through the first extension tube 1111. It should be noted that, a third sealing ring 1112 may be disposed at the third through hole, and the third sealing ring 1112 may be partially squeezed between an outer wall of the first extension tube 1111 and an inner wall of the third through hole, to avoid the fluid in the second chamber 12 from leaking.

Similarly, a second extension tube 2111 may be disposed at the third opening 211, the second housing 223 may be provided with a fourth through hole 2231 at a position corresponding to the second extension tube 2111, and the second extension tube 2111 may extend from the fourth through hole 2231 to the outside of the fourth chamber 22, so that the third chamber 21 can communicate with another component through the second extension tube 2111. A fourth sealing ring 2112 may be disposed at the fourth through hole 2231, and the fourth sealing ring 2112 may be partially squeezed between an outer wall of the second extension tube 2111 and an inner wall of the fourth through hole 2231, to avoid the fluid in the fourth chamber 22 from leaking.

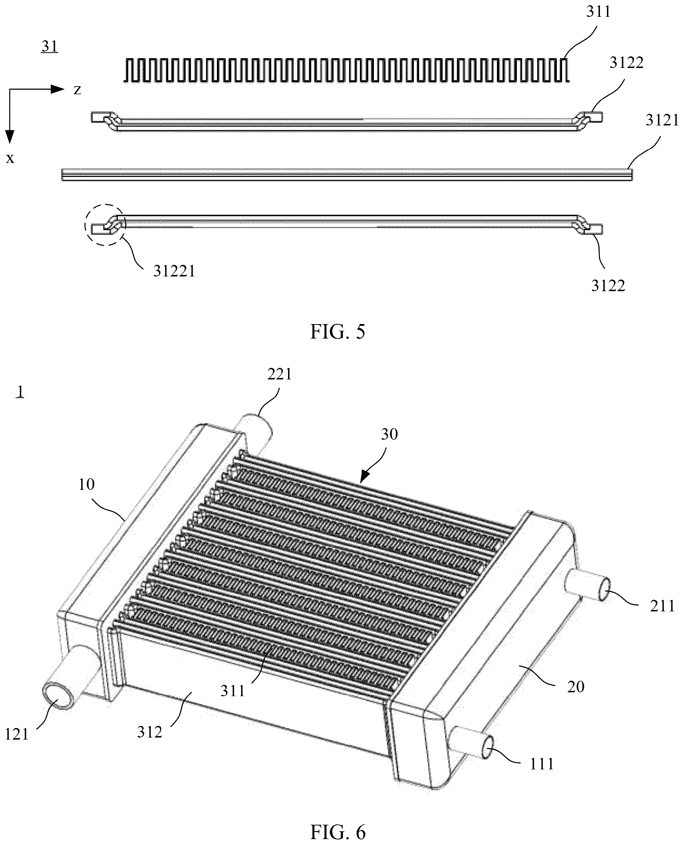

FIG. 4 is a schematic diagram of a structure of a heat exchange unit according to an embodiment of this application. FIG. 5 is a schematic exploded view of the heat exchange unit shown in FIG. 4. Refer to FIG. 4 and FIG. 5 together. In this embodiment, each heat exchange unit 31 may include three flow guiding members 312 and one fin 311. The three flow guiding members 312 may respectively form one first flow channel 3121 and two second flow channels 3122. Along the first direction x, the first flow channel 3121 may be located between the two second flow channels 3122, and the fin 311 may be located on a side that is one of the second flow channels 3122 and that is away from the first flow channel 3121. During specific disposition, the three flow guiding members 312 may be separately in a flat tube form, and a cross section that is of the fin 311 and that is perpendicular to the second direction y may be approximately a square waveform shown in the figure, or may be in a wave shape, a sawtooth shape, a snake shape, or the like. This is not limited in this application.

For the entire heat exchange core 30 including the plurality of heat exchange units 31, the flow guiding member 312 configured to form the first flow channel 3121 may be directly in thermally conductive contact with the flow guiding member 312 configured to form the second flow channel 3122, so that a fluid in the first flow channel 3121 directly exchanges heat with a fluid in the second flow channel 3122. The flow guiding member 312 configured to form the second flow channel 3122 may also be directly in thermally conductive contact with the fin 311, so that the fluid in the second flow channel 3122 directly exchanges heat with air flowing through the fin 311. The flow guiding member 312 configured to form the first flow channel 3121 may be indirectly in thermally conductive contact with the fin 311 through the second flow channel 3122. When water or a refrigerant with high thermal conductivity flows in the second flow channel 3122, thermal resistance of each flow guiding member 312 may be negligible. Therefore, the fluid in the first flow channel 3121 can also exchange heat with the air flowing through the fin 311.

Refer to FIG. 2, FIG. 4, and FIG. 5 together. Two ends of the two flow guiding members 312 configured to form the second flow channels 3122 may be separately provided with bent parts 31221, and each bent part 31221 may be bent toward a side away from the first flow channel 3121, so that at two ends of the heat exchange unit 31, end parts of the three flow guiding members 312 may be spaced from each other. In this way, on the first side wall 124 of the second chamber 12, the second flow distribution opening 122 and the first through hole 1241 may be independent of each other, and on the second side wall of the fourth chamber 22, the fourth flow distribution opening and the second through hole may also be independent of each other. This helps improve sealing performance of the second chamber 12 and sealing performance of the fourth chamber 22.

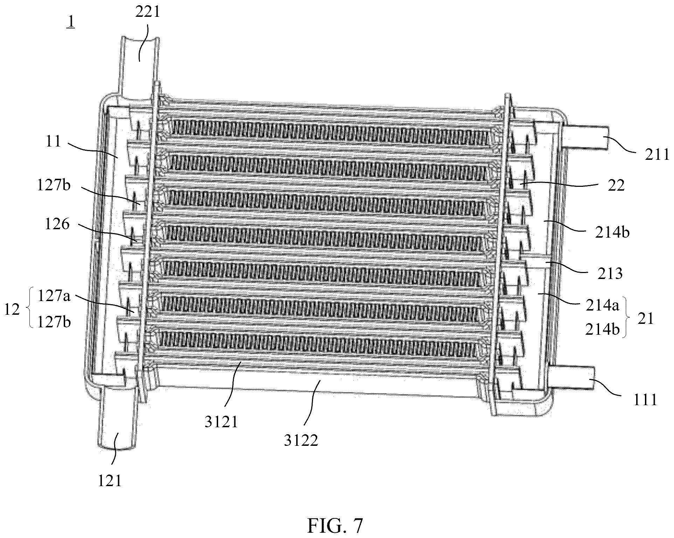

FIG. 6 is a schematic diagram of a structure of another heat exchanger according to an embodiment of this application. FIG. 7 is a sectional view of the heat exchanger shown in FIG. 6. In this embodiment, the two openings of the first flow path may alternatively be both provided on the first chamber 11, or both may be provided on the third chamber 21. In the embodiment shown in FIG. 6, an example in which the two openings are both provided on the third chamber 21 is used for description. The two openings of the first flow path are respectively denoted as the first opening 111 and the third opening 211. The first opening 111 and the third opening 211 may also respectively extend to the outside of the fourth chamber 22 through extension tubes, so that the third chamber 21 can communicate with another component through an extension tube 2111. A first baffle plate 213 may be disposed in the third chamber 21. The first baffle plate 213 may divide the third chamber 21 into two first sub-chambers 214a and 214b. The first opening 111 and the third opening 211 may be respectively provided on the two first sub-chambers 214a and 214b, so that the corresponding first sub-chambers 214a and 214b communicate with the outside. Similarly, the two openings of the second flow path may be both provided on the second chamber 12, or both may be provided on the fourth chamber 22. In the embodiment shown in FIG. 6, an example in which the two openings are both provided on the second chamber 12 is used for description. The two openings of the second flow path are respectively denoted as the second opening 121 and the fourth opening 221. A second baffle plate 126 may be disposed in the second chamber 12. The second baffle plate 126 may divide the second chamber 12 into two second sub-chambers 127a and 127b. The second opening 121 and the fourth opening 221 may be respectively provided on the two second sub-chambers 127a and 127b, so that the corresponding second sub-chambers 127a and 127b communicate with the outside.

When the heat exchanger 1 works, a fluid in a circulation loop in which the first flow path is located enters one first sub-chamber 214a of the third chamber 21 through the first opening 111, and flows, in the first sub-chamber 214a, to the first chamber 11 through the corresponding first flow channel 3121. Because the first chamber 11 does not have an opening for communicating with the outside, pressure gradually increases as the fluid continuously enters the first chamber 11. In this way, the fluid in the first chamber 11 can return to the third chamber 21 through the first flow channel 3121 corresponding to the other first sub-chamber 214b, and then flow out of the heat exchanger 1 through the third opening 211 of the first sub-chamber 214b. Similarly, a fluid in a circulation loop in which the second flow path is located enters one second sub-chamber 127a of the second chamber 12 through the second opening 121, and flows, in the second sub-chamber 127a, to the fourth chamber 22 through the corresponding second flow channel 3122. Because the fourth chamber 22 does not have an opening for communicating with the outside, pressure gradually increases as the fluid continuously enters the fourth chamber 22. In this way, the fluid in the fourth chamber 22 can return to the second chamber 12 through the second flow channel 3122 corresponding to the other second sub-chamber 127b, and then flow out of the heat exchanger 1 through the fourth opening 221 of the second sub-chamber 127b. It can be seen that, operations of two processes: the third chamber 21 to the first chamber 11 and the first chamber 11 to the third chamber 21, of the fluid in the first flow path can be implemented in the heat exchange unit 31, and operations of two processes: the second chamber 12 to the fourth chamber 22 and the fourth chamber 22 to the second chamber 12, of the fluid in the second flow path can be implemented in the heat exchange unit 31, so that the three fluids in the heat exchanger 1 can exchange heat more fully. In this way, heat exchange effect of the heat exchanger 1 can be improved.

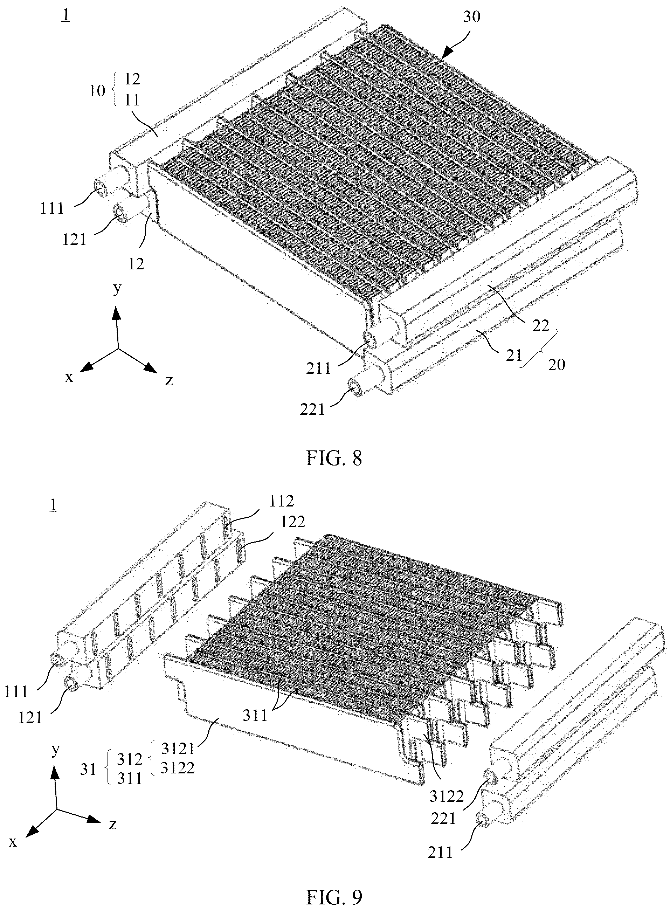

FIG. 8 is a schematic diagram of a structure of another heat exchanger according to an embodiment of this application. FIG. 9 is a schematic exploded view of a heat exchange unit shown in FIG. 8. In this embodiment, each heat exchange unit 31 may include two flow guiding members 312 and two fins 311. The two flow guiding members 312 may be separately in a flat tube form. The two flow guiding members 312 may respectively form one first flow channel 3121 and one second flow channel 3122. Along the first direction, the flow guiding member 312 configured to form the first flow channel 3121 may be located between the two fins 311, and the flow guiding member 312 configured to form the second flow channel 3122 may be located on a side that is of one of the fins 311 and that is away from the first flow channel 3121. Alternatively, the flow guiding member 312 configured to form the second flow channel 3122 may be located between the two fins 311, and the flow guiding member 312 configured to form the first flow channel 3121 may be located on a side that is of one of the fins 311 and that is away from the second flow channel 3122.

In addition, in this embodiment, the first opening 111 and the third opening 211 may be respectively provided on the first chamber 11 and the third chamber 21, or may be both provided on the first chamber 11 or the third chamber 21. The second opening 121 and the fourth opening 221 may be respectively provided on the second chamber 12 and the fourth chamber 22, or may be both provided on the second chamber 12 or the fourth chamber 22. This is not limited in this application. In the embodiment shown in FIG. 8, an example in which each chamber is provided with an opening is used for description.

An example in which the flow guiding member 312 configured to form the second flow channel 3122 is located between the two fins 311 is used. For the entire heat exchange core 30 including the plurality of heat exchange units 31, the flow guiding member 312 configured to form the first flow channel 3121 may be directly in thermally conductive contact with the fins 311, so that a fluid in the first flow channel 3121 directly exchanges heat with air flowing through the fins 311. The flow guiding member 312 configured to form the second flow channel 3122 may also be directly in thermally conductive contact with the fins 311, so that a fluid in the second flow channel 3122 directly exchanges heat with the air flowing through the fins 311. The flow guiding member 312 configured to form the first flow channel 3121 may be in thermally conductive contact with the flow guiding member 312 configured to form the second flow channel 3122 by using the fins. Because thermal resistance of each fin 311 is small, the fluid in the first flow channel 3121 can also exchange heat with the fluid in the second flow channel 3122.

In a possible embodiment, the first chamber 11 and the second chamber 12 may be disposed in parallel along the second direction y, and the outer wall of the first chamber 11 is in contact with the outer wall of the second chamber 12, so that a fluid in the first chamber 11 can exchange heat with a fluid in the second chamber 12. Similarly, the third chamber 21 and the fourth chamber 22 may also be disposed in parallel along the second direction y, and outer walls of the third chamber 21 and the fourth chamber 22 are also in contact with each other, so that a fluid in the third chamber 21 can exchange heat with a fluid in the fourth chamber 22.

In the foregoing embodiment, at one end that is of the first flow channel 3121 and that is connected to the first chamber 11, the flow guiding member 312 configured to form the first flow channel 3121 is designed with an opening at a position corresponding to the first flow distribution opening 112 of the first chamber 11, and is designed with a closure at a position corresponding to the second chamber 12. At one end that is of the first flow channel 3121 and that is connected to the third chamber 21, the flow guiding member 312 configured to form the first flow channel 3121 is designed with an opening at a position corresponding to the third flow distribution opening (not shown in the figure) of the third chamber 21, and is designed with a closure at a position corresponding to the fourth chamber 22, to avoid the fluid in the first flow channel 3121 from flowing outside the first chamber 11 or the third chamber 21. Similarly, at one end that is of the second flow channel 3122 and that is connected to the second chamber 12, the flow guiding member 312 configured to form the second flow channel 3122 is designed with an opening at a position corresponding to the second flow distribution opening of the second chamber 12, and is designed with a closure at a position corresponding to the first chamber 11. At one end that is of the second flow channel 3122 and that is connected to the fourth chamber 22, the flow guiding member 312 configured to form the second flow channel 3122 is designed with an opening at a position corresponding to the fourth flow distribution opening (not shown in the figure) of the fourth chamber 22, and is designed with a closure at a position corresponding to the third chamber 21, to avoid the fluid in the second flow channel (not shown in the figure) from flowing outside the second chamber 12 or the fourth chamber 22.

In addition, for the first flow collector 10, the first chamber 11 may be located above the second chamber 12, and for the second flow collector 20, the fourth chamber 22 may be located above the third chamber 21. In other words, along the third direction z, the first chamber 11 is opposite to the fourth chamber 22, and the second chamber 12 is opposite to the third chamber 21. When the fluid in the first flow channel 3121 flows from left to right, because the first chamber 11 on a left side is located above, and the third chamber 21 on a right side is located below, the fluid in the first flow channel 3121 has a trend of flowing from top to bottom. When the fluid in the second flow channel 3122 flows from right to left, because the fourth chamber 22 on the right side is located above, and the second chamber 12 on the right side is located below, the fluid in the second flow channel 3122 also has a trend of flowing from top to bottom. In this way, when flowing through airflow channels of the fins 311 from bottom to top, air can separately form convection with the fluid in the first flow channel 3121 and the fluid in the second flow channel 3122. This improves heat exchange efficiency of the three fluids.

It should be understood that, in some other embodiments, for the first flow collector 10 and the second flow collector 20, refer to disposing manners in the foregoing embodiment. In other words, the first chamber 11 is disposed inside the second chamber 12, and the third chamber 21 is disposed inside the fourth chamber 22. For specific structures of the two flow collectors, refer to the descriptions in the foregoing embodiment. Details are not described herein again.

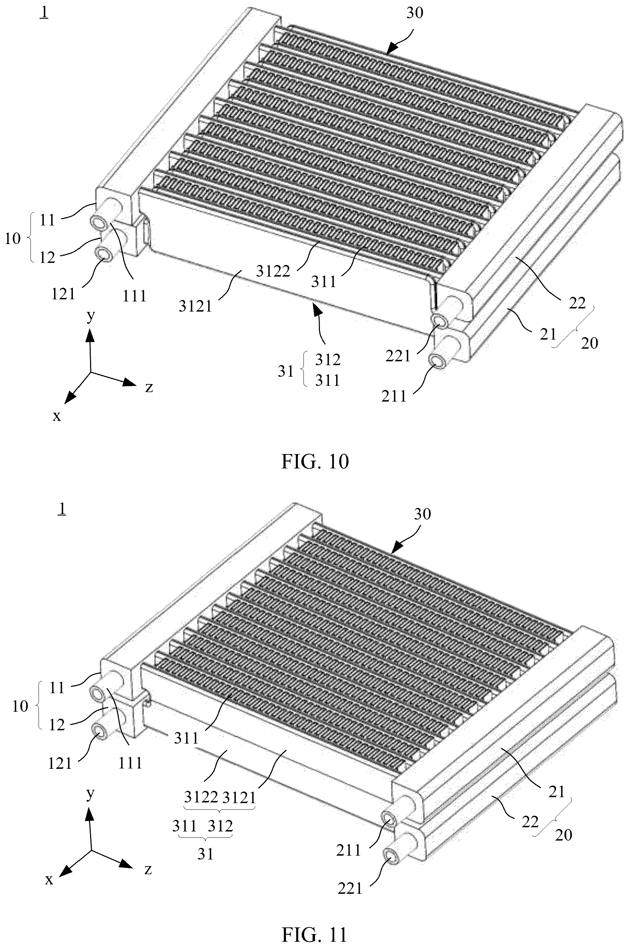

FIG. 10 is a schematic diagram of a structure of another heat exchanger according to an embodiment of this application. Refer to FIG. 10. In this embodiment, each heat exchange unit 31 may include two flow guiding member 312 and one fin 311. The two flow guiding members 312 may be separately in a flat tube form. The two flow guiding member 312 may respectively form one first flow channel 3121 and one second flow channel 3122. The first flow channel 3121, the second flow channel 3122, and the fin 311 are disposed in parallel along the first direction x. During specific disposition, the fin 311 may be located between the first flow channel 3121 and the second flow channel 3122, or located on a side that is of the first flow channel 3121 and that is away from the second flow channel 3122, or may be located on a side that is of the second flow channel 3122 and that is away from the first flow channel 3121. This is not limited in this application.

In addition, in this embodiment, the first opening 111 and the third opening 211 may be respectively provided on the first chamber 11 and the third chamber 21, or may be both provided on the first chamber 11 or the third chamber 21. The second opening 121 and the fourth opening 221 may be respectively provided on the second chamber 12 and the fourth chamber 22, or may be both provided on the second chamber 12 or the fourth chamber 22. This is not limited in this application. In the embodiment shown in FIG. 10, an example in which each chamber is provided with an opening is used for description.

An example in which the fin 311 is located on the side that is of the second flow channel 3122 and that is away from the first flow channel 3121 is used. For the entire heat exchange core 30 including the plurality of heat exchange units 31, the flow guiding member 312 configured to form the first flow channel 3121 may be directly in thermally conductive contact with the flow guiding member 312 configured to form the second flow channel 3122, so that a fluid in the first flow channel 3121 directly exchanges heat with a fluid in the second flow channel 3122. The flow guiding member 312 configured to form the second flow channel 3122 may also be directly in thermally conductive contact with the fin 311, so that the fluid in the second flow channel 3122 directly exchanges heat with air flowing through the fin 311. The flow guiding member 312 configured to form the first flow channel 3121 may be indirectly in contact with the fin 311 through the second flow channel 3122. When water or a refrigerant with high thermal conductivity flows in the second flow channel 3122, thermal resistance of each flow guiding member 312 may be negligible. Therefore, the fluid in the first flow channel 3121 can also exchange heat with the air flowing through the fin 311.

In this embodiment, the first flow collector 10 may use a built-in structure in which the first chamber 11 is disposed inside the second chamber 12, or may use a parallel structure in which the first chamber 11 and the second chamber 12 are arranged along the second direction y. Similarly, the second flow collector 20 may use a built-in structure in which the third chamber 21 is disposed inside the fourth chamber 22, or may use a parallel structure in which the third chamber 21 and the fourth chamber 22 are arranged along the second direction y. This is not limited in this application. For specific setting manners of the built-in structure and the parallel structure, refer to the descriptions in the foregoing embodiment. Details are not described herein again.

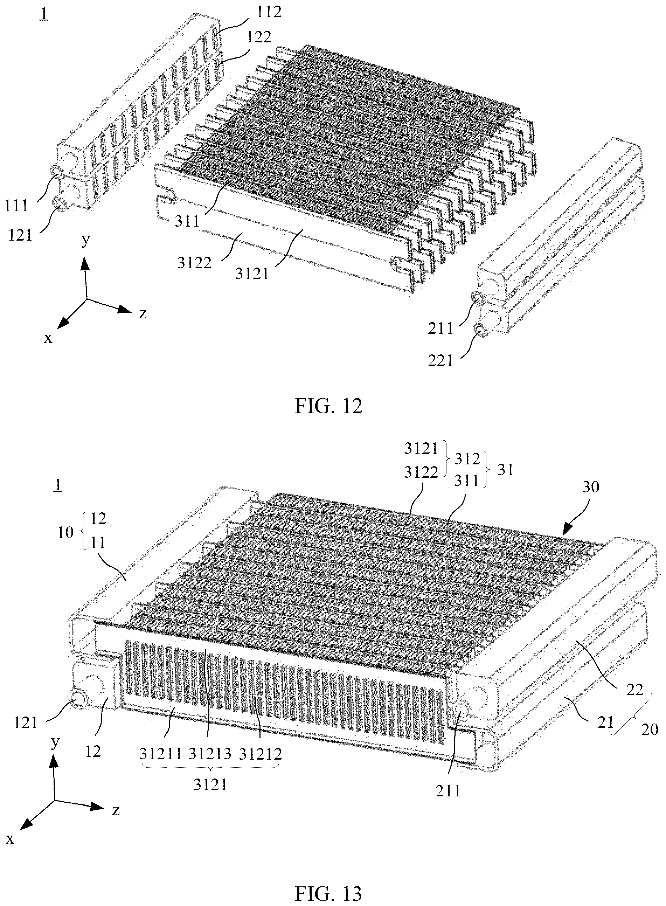

FIG. 11 is a schematic diagram of a structure of another heat exchanger according to an embodiment of this application. FIG. 12 is a schematic exploded view of a part of the heat exchanger shown in FIG. 11. Refer to FIG. 11 and FIG. 12 together. In this embodiment, each heat exchange unit 31 may include two flow guiding members 312 and one fin 311. The two flow guiding members 312 may be separately in a flat tube form. The two flow guiding members 312 may respectively form one first flow channel 3121 and one second flow channel 3122. During specific implementation, the two flow guiding members 312 may be disposed in parallel along the second direction y to form a flow guiding component, and outer walls of the two flow guiding members 312 are in contact with each other. The flow guiding component formed by the two flow guiding members 312 and the fin 311 may be disposed in parallel along the first direction x. The flow guiding member 312 configured to form the first flow channel 3121 may be located above the flow guiding member 312 configured to form the second flow channel 3122, or the flow guiding member 312 configured to form the second flow channel 3122 may be located above the flow guiding member 312 configured to form the first flow channel 3121.

In addition, in this embodiment, the first opening 111 and the third opening 211 may be respectively provided on the first chamber 11 and the third chamber 21, or may be both provided on the first chamber 11 or the third chamber 21. The second opening 121 and the fourth opening 221 may be respectively provided on the second chamber 12 and the fourth chamber 22, or may be both provided on the second chamber 12 or the fourth chamber 22. This is not limited in this application. In the embodiment shown in FIG. 11, an example in which each chamber is provided with an opening is used for description.

For the entire heat exchange core 30 including the plurality of heat exchange units 31, the flow guiding member 312 configured to form the first flow channel 3121 may be directly in thermally conductive contact with the flow guiding member 312 configured to form the second flow channel 3122, so that a fluid in the first flow channel 3121 directly exchanges heat with a fluid in the second flow channel 3122. The flow guiding member 312 configured to form the second flow channel 3122 may also be directly in thermally conductive contact with the fin 311, so that the fluid in the second flow channel 3122 directly exchanges heat with air flowing through the fin 311. The flow guiding member 312 configured to form the first flow channel 3121 may also be directly in thermally conductive contact with the fin 311, so that the fluid in the first flow channel 3121 directly exchanges heat with the air flowing through the fin 311.

In this embodiment of this application, the first flow collector 10 may use a built-in structure in which the first chamber 11 is disposed inside the second chamber 12, or may use a parallel structure in which the first chamber 11 and the second chamber 12 are arranged along the second direction y. Similarly, the second flow collector 20 may use a built-in structure in which the third chamber 21 is disposed inside the fourth chamber 22, or may use a parallel structure in which the third chamber 21 and the fourth chamber 22 are arranged along the second direction y. This is not limited in this application. Different from the foregoing embodiment, when the first flow collector 10 and the second flow collector 20 use the parallel structure, because the first flow channel 3121 and the second flow channel 3122 are vertically disposed in parallel, to facilitate connection between two ends of the first flow channel 3121 and the first chamber 11 and the third chamber 21, the first chamber 11 and the third chamber 21 may be disposed opposite to each other along the third direction z. In addition, upper and lower positions of the first chamber 11 and the third chamber 21 may be determined based on the upper or lower position of the first flow channel. For example, when the first flow channel 3121 is located above the second flow channel 3122, the first chamber 11 and the third chamber 21 may be respectively located above the second chamber 12 and the fourth chamber 22. It may be understood that, after positions of the first flow channel 3121, the first chamber 11, and the third chamber 21 are determined, positions of the second flow channel 3122, the second chamber 12, and the fourth chamber 22 may also be determined accordingly. Therefore, details are not described herein again.

It should be noted that, in the foregoing embodiments, to enable fluids in the first flow channel 3121 and the second flow channel 3122 to better exchange heat with the air flowing through the fin 311, the first flow channel 3121 and the second flow channel 3122 may be further provided with corresponding paths respectively, so that the fluids in the two flow channels can form convection with the air when flowing along the paths. This improves heat exchange efficiency. Refer to FIG. 13. In the embodiment shown in FIG. 13, an example in which each heat exchange unit 31 includes two flow guiding members 312 and two fins 311 is used for description. During specific implementation, there may be a first path 31211, a second path 31212, and a third path 31213 in the flow guiding member 312 configured to form the first flow channel 3121. The first path 31211 and the second path 31212 may be separately disposed along the third direction z. The first path 31211 communicates with the first flow distribution opening of the first chamber 11. The second path 31212 communicates with the third flow distribution opening of the third chamber 21. The third path 31213 may be disposed along the second direction y. Two ends of the third path 31213 respectively communicate with the first path 31211 and 31212. For example, the first path 31211 and the second path 31212 may be respectively disposed on two sides of the first flow channel 3121 along the second direction y, that is, above and below the first flow channel 3121. There may be a plurality of third paths 31213. The plurality of third paths 31213 may be disposed in parallel along the third direction z. When the heat exchanger 1 works, a fluid in the first chamber 11 enters the first path 31211 of the first flow channel 3121 through the first flow distribution opening, enters the second path 31212 through the third path 31213 in the first path 31211, and finally flows into the third chamber 21 through the second path 31212. When the fluid flows through the third path 31213 from top to bottom, air may flow through the airflow channels of the fins 311 from bottom to top at the same time. In this way, the fluid and the air can form convection. This improves the heat exchange efficiency.

Similarly, there may be a fourth path, a fifth path, and a sixth path in the flow guiding member 312 configured to form the second flow channel 3122. The fourth path and the fifth path may be separately disposed along the third direction. The fourth path communicates with the second flow distribution opening of the second chamber. The fifth path communicates with the fourth flow distribution opening of the fourth chamber. The sixth path may be disposed along the second direction y. Two ends of the sixth path respectively communicate with the fourth path and the fifth path. For example, the fourth path and the fifth path may be respectively disposed on two sides of the second flow channel 3122 along the second direction y, that is, below and above the second flow channel 3122. There may be a plurality of sixth paths. The plurality of sixth paths may be disposed in parallel along the third direction. When the heat exchanger 1 works, a fluid in the fourth chamber 22 enters the fifth path of the second flow channel 3122 through the fourth flow distribution opening, enters the fourth path through the sixth path in the fifth path, and finally flows into the second chamber 12 through the fourth path. When the fluid flows through the sixth path from top to bottom, air may flow through the airflow channels of the fins 311 from bottom to top at the same time. In this way, the fluid and the air can form convection. This improves the heat exchange efficiency.

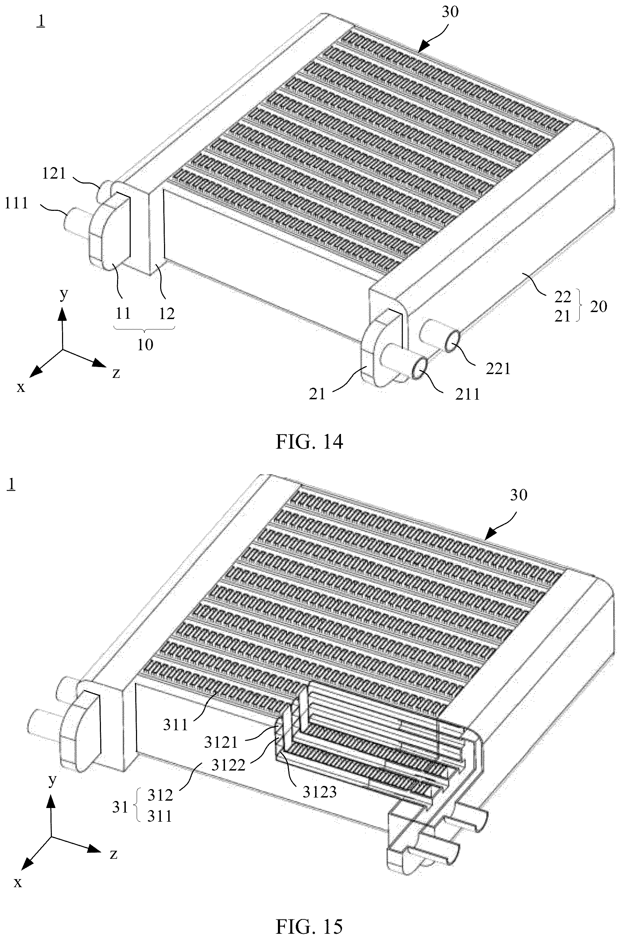

FIG. 14 is a schematic diagram of a structure of another heat exchanger according to an embodiment of this application. FIG. 15 is a schematic exploded view of a part of the heat exchanger shown in FIG. 14. Refer to FIG. 14 and FIG. 15 together. In this embodiment, each heat exchange unit 31 may include one flow guiding member 312 and one fin 311. The flow guiding member 312 and the fin 311 may be disposed in parallel along the first direction x. A division plate 3123 may be disposed inside the flow guiding member 312. There may be one or more division plates 3123. The flow guiding member 312 may be divided into a first flow channel 3121 and a second flow channel 3122 by using the division plate 3123. During specific implementation, there may be one or more division plates 3123, so that there is also one or more first flow channels 3121 and one or more second flow channels 3122 formed through division. It may be understood that, when there are a plurality of first flow channels 3121 and a plurality of second flow channels 3122, to improve heat exchange effect of a fluid in each first flow channel 3121 and a fluid in each second flow channel 3122, the first flow channels 3121 and the second flow channels 3122 may be alternately arranged along the second direction y.

In addition, in this embodiment, the first opening 111 and the third opening 211 may be respectively provided on the first chamber 11 and the third chamber 21, or may be both provided on the first chamber 11 or the third chamber 21. The second opening 121 and the fourth opening 221 may be respectively provided on the second chamber 12 and the fourth chamber 22, or may be both provided on the second chamber 12 or the fourth chamber 22. This is not limited in this application. In the embodiment shown in FIG. 14, an example in which each chamber is provided with an opening is used for description.

For the entire heat exchange core 30 including the plurality of heat exchange units 31, the first flow channel 3121 may be directly in thermally conductive contact with the second flow channel 3122, so that a fluid in the first flow channel 3121 directly exchanges heat with a fluid in the second flow channel 3122. The flow guiding member 312 may be directly in thermally conductive contact with the fin 311, so that the fluid in the first flow channel 3121 and the fluid in the second flow channel 3122 directly exchange heat with air flowing through the fin 311.

In this embodiment, the first flow collector 10 and the second flow collector 20 may separately use the built-in structure. In other words, the first chamber 11 is disposed inside the second chamber 12, and the third chamber 21 is disposed inside the fourth chamber 22. During specific disposition, a position that is on a side wall of the flow guiding member 312 and that corresponds to each first flow channel 3121 may be appropriately extended. Correspondingly, each division plate 3123 may also be extended, so that two ends of the first flow channel 3121 exceed the second flow channel. In this way, the first flow channel 3121 is connected to the first chamber 11 and the third chamber 21.

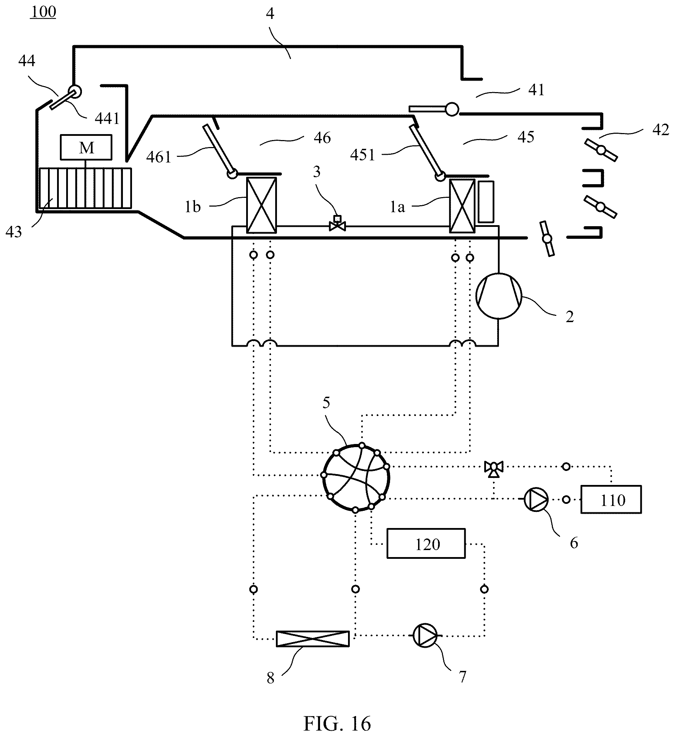

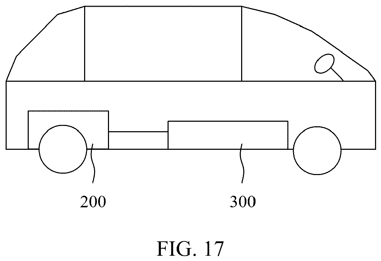

Embodiments of this application further provide a vehicle-mounted heat management system and an electric vehicle to which the vehicle-mounted heat management system is applied. Refer to FIG. 16 and FIG. 17 together. FIG. 16 is a schematic diagram of a structure of a vehicle-mounted heat management system according to an embodiment of this application. FIG. 17 is a schematic diagram of a structure of an electric vehicle according to an embodiment of this application. The electric vehicle provided in embodiments of this application may be specifically an electric vehicle. The vehicle-mounted heat management system 100 may be configured to control temperatures of components such as a passenger compartment, a power assembly 200, and a battery pack 300 of the electric vehicle. In a specific design, the vehicle-mounted heat management system 100 may include a compressor 2, an expansion valve 3, and the heat exchanger in any one of the foregoing possible embodiments. There may be two heat exchangers, which are respectively a first heat exchanger 1a and a second heat exchanger 1b. An outlet of the compressor 2 may be connected to a first opening of the first heat exchanger 1a. The expansion valve 3 may be connected between a third opening of the first heat exchanger 1a and a first opening of the second heat exchanger 1b. A third opening of the second heat exchanger 1b may be connected to an inlet of the compressor 2. In this way, the compressor 2, the first heat exchanger 1a, the expansion valve 3, and the second heat exchanger 1b can be sequentially connected to form a first circulation loop. The first circulation loop is a refrigerant loop of the vehicle-mounted heat management system 100. In this case, the first heat exchanger 1a and the second heat exchanger 1b can be respectively used as a condenser and an evaporator.

The vehicle-mounted heat management system 100 may further include an air supply channel 4. The air supply channel 4 may be separately connected to an internal air intake vent 41 and an internal air exhaust vent 42 of the passenger compartment. The first heat exchanger 1a and the second heat exchanger 1b may be separately disposed in the air supply channel 4. An air intake side of a fin of the first heat exchanger 1a may communicate with the internal air intake vent 41. An air exhaust side of the fin of the first heat exchanger 1a may communicate with the internal air exhaust vent 42. An air intake side of a fin of the second heat exchanger 1b may communicate with the internal air intake vent 41. An air exhaust side of the fin of the second heat exchanger 1b may communicate with the internal air exhaust vent 42. In addition, a fan 43 may be further disposed in the air supply channel 4. The fan 43 may be specifically disposed upstream of the first heat exchanger 1a and the second heat exchanger 1b, that is, located on sides that are of the first heat exchanger 1a and the second heat exchanger 1b and that are close to the internal air intake vent 41, to send air entering the air supply channel 4 to the air intake side of the first heat exchanger 1a or the air intake side of the second heat exchanger 1b.

It should be noted that, the air supply channel 4 may be further provided with an external air intake vent 44. The air supply channel 4 may communicate with the outside of the passenger compartment through the external air intake vent 44, so that external fresh air can enter the air supply channel 4. During specific disposition, the external air intake vent 44 may be provided downstream of the internal air intake vent 41, and a first damper 441 may be disposed at the external air intake vent 44. The first damper 441 has a first working state in which the external air intake vent 44 is closed, and a channel between the external air intake vent 44 and the internal air intake vent 41 is opened, and a second working state in which the external air intake vent 44 is opened, and the channel between the external air intake vent 44 and the internal air intake vent 41 is closed. When the first damper 441 is in the first working state, air in the passenger compartment may be circulated. When the first damper 441 is in the second working state, fresh air may be introduced into the passenger compartment, to implement a fresh air function.

There may be a first gap 45 between the first heat exchanger 1a and an inner wall of a side of the air supply channel 4. A first flow guiding plate 451 may be disposed at the first gap 45. The first flow guiding plate 451 may have two flow guiding states in which the first gap 45 is opened and closed. When the first flow guiding plate 451 opens the first gap 45, air on the air intake side of the fin of the first heat exchanger 1a may bypass the first heat exchanger 1a, and flow downstream of the first heat exchanger 1a through the first gap 45. When the first flow guiding plate 451 closes the first gap 45, the air on the air intake side of the fin of the first heat exchanger 1a flows downstream of the first heat exchanger 1a through an airflow channel of the fin. There may be a second gap 46 between the second heat exchanger 1b and the inner wall of the side of the air supply channel 4. A second flow guiding plate 461 may be disposed at the second gap 46. Similarly, the second flow guiding plate 461 may have two flow guiding states in which the second gap 46 is opened and closed. When the second flow guiding plate 461 opens the second gap 46, air on the air intake side of the fin of the second heat exchanger 1b may bypass the second heat exchanger 1b, and flow downstream of the second heat exchanger 1b through the second gap 46. When the second flow guiding plate 461 closes the second gap 46, the air on the air intake side of the fin of the second heat exchanger 1b flows downstream of the second heat exchanger 1b through an airflow channel of the fin.

Still refer to FIG. 16. The vehicle-mounted heat management system 100 may further include a nine-way valve 5, a first circulation pump 6, and a second circulation pump 7. The battery pack of the electric vehicle may have a first heat dissipation path 110. An inlet of the first heat dissipation path 110 may be connected to an outlet of the first circulation pump 6. An outlet of the first heat dissipation path 110 may be connected to a fourth opening of the second heat exchanger 1b by using the nine-way valve 5. A second opening of the second heat exchanger 1b may be connected to an inlet of the first circulation pump 6 by using the nine-way valve 5. In this way, the first circulation pump 6, the first heat dissipation path 110, and the second heat exchanger 1b can be sequentially connected to form a second circulation loop. The second circulation loop is a cooling loop of the battery pack.

In addition, the outlet of the first heat dissipation path 110 may also be connected to a fourth opening of the first heat exchanger 1a by using the nine-way valve 5. A second opening of the first heat exchanger 1a may be connected to the inlet of the first circulation pump 6 by using the nine-way valve 5. In this case, the first circulation pump 6, the first heat dissipation path 110, and the first heat exchanger 1a can be sequentially connected to form a third circulation loop. The third circulation loop is a heating loop of the battery pack.

The power assembly of the electric vehicle may have a second heat dissipation path 120. An inlet of the second heat dissipation path 120 may be connected to an outlet of the first circulation pump 6. An outlet of the second heat dissipation path 120 may be connected to the fourth opening of the second heat exchanger 1b by using the nine-way valve 5. The second opening of the second heat exchanger 1b may be connected to an inlet of the second circulation pump 7 by using the nine-way valve 5. In this way, the second circulation pump 7, the second heat dissipation path 120, and the second heat exchanger 1b can be sequentially connected to form a fourth circulation loop. The fourth circulation loop may be used as a cooling loop of the power assembly.

In some embodiments, the vehicle-mounted heat management system 100 may further include a heat sink 8. An end of the second heat dissipation path 120 may be further connected to an inlet of the heat sink 8 by using the nine-way valve 5. An outlet of the heat sink 8 may be connected to the inlet of the second circulation pump 7 by using the nine-way valve 5. In this case, the second circulation pump 7, the second heat dissipation path 120, and the heat sink 8 can be sequentially connected to form a fifth circulation loop. The fifth circulation loop may be used as another cooling loop of the power assembly. For example, the heat sink 8 may be specifically an air-cooled heat sink. After entering the heat sink 8, cooling water in the fifth circulation loop may directly exchange heat with air flowing through a surface of the heat sink 8, to be cooled.

The following specifically describes working processes of the foregoing circulation loops of the vehicle-mounted heat management system.

In this embodiment of this application, the first circulation loop may work in a plurality of modes such as a cooling mode, a heating mode, and a dehumidification mode. When the first circulation loop works in the cooling mode, the first flow guiding plate 451 opens the first gap 45, and the second flow guiding plate 461 closes the second gap 46. A refrigerant is compressed into high-temperature and high-pressure gas by using the compressor 2, and enters a first flow path of the first heat exchanger 1a. In the first flow path, the gas exchanges heat with low-temperature cooling water in the second flow path and is condensed, and then becomes low-temperature and high-pressure liquid. Then, the liquid is quickly cooled through throttling expansion of the expansion valve 3, and becomes low-temperature and low-pressure liquid. The liquid enters a first flow path of the second heat exchanger 1b. In the second heat exchanger 1b, the liquid exchanges heat with air flowing through the fin and is evaporated, and then becomes a low-pressure gaseous refrigerant, and returns to the compressor 2, to complete circulation. At the same time, after exchanging heat with a refrigerant in the second heat exchanger 1b and being cooled, air in the air supply channel 4 flows to the internal air exhaust vent 42 through the first gap 45, and then is sent to the passenger compartment through the internal air exhaust vent 42, to achieve cooling effect.

When the first circulation loop works in the heating mode, the first flow guiding plate 451 closes the first gap 45, and the second flow guiding plate 461 opens the second gap 46. A refrigerant is compressed into high-temperature and high-pressure gas by using the compressor 2, and enters the first flow path of the first heat exchanger 1a. In the first heat exchanger 1a, the gas exchanges heat with air flowing through the fin and is condensed, and becomes low-temperature and high-pressure liquid. Then, the liquid is quickly cooled through throttling expansion of the expansion valve 3, and becomes low-temperature and low-pressure liquid. The liquid enters the first flow path of the second heat exchanger 1b. In the first flow path, the liquid exchanges heat with high-temperature cooling water in the second flow path and is evaporated, and then becomes a low-pressure gaseous refrigerant, and returns to the compressor 2, to complete circulation. At the same time, air in the air supply channel 4 flows from the second gap 46 to the air intake side of the first heat exchanger 1a. After the air exchanges heat with a refrigerant in the first heat exchanger 1a, and a temperature increases, the air flows to the internal air exhaust vent 42, and then is sent to the passenger compartment through the internal air exhaust vent 42, to achieve heating effect.

When the first circulation loop works in the dehumidification mode, the first flow guiding plate 451 closes the first gap 45, and the second flow guiding plate 461 closes the second gap 46. A refrigerant is compressed into high-temperature and high-pressure gas by using the compressor 2, and enters the first flow path of the first heat exchanger 1a. In the first heat exchanger 1a, the gas exchanges heat with air flowing through the fin and is condensed, and becomes low-temperature and high-pressure liquid. Then, the liquid is quickly cooled through throttling expansion of the expansion valve 3, and becomes low-temperature and low-pressure liquid. The liquid enters the first flow path of the second heat exchanger 1b. In the second heat exchanger 1b, the liquid exchanges heat with air flowing through the fin and is evaporated, and then becomes a low-pressure gaseous refrigerant, and returns to the compressor 2, to complete circulation. At the same time, air in the air supply channel 4 enters the second heat exchanger 1b, and exchanges heat with a refrigerant in the second heat exchanger 1b and is cooled, so that moisture in the air is discharged from a condensate pipe of the system after being condensed when the moisture cools. Dried air is discharged from the air exhaust side of the second heat exchanger 1b, and then enters the first heat exchanger 1a. After the air exchanges heat with a refrigerant in the first heat exchanger 1a, and a temperature increases to be a normal temperature, the air flows to the internal air exhaust vent 42, and then is sent to the passenger compartment through the internal air exhaust vent 42, to achieve dehumidification effect.

It should be noted that, when the first circulation loop runs in the cooling mode, the heating mode, the dehumidification mode, and the like, the cooling mode, the heating mode, the dehumidification mode, and the like may be implemented through an air circulation function of the passenger compartment, or may be implemented through a fresh air function. This is not limited in this application. During actual application, a passenger may adjust a working state of the first damper based on a requirement.

When the second circulation loop works, the first circulation loop may work at the same time. In this case, the first circulation pump 6 drives cooling water to circulate in the second circulation loop. After entering the first heat dissipation path 110, low-temperature cooling water exchanges heat with the battery pack. After the cooling water absorbs heat of the battery pack, a temperature increases. The battery pack transfers the heat to the cooling water to be cooled. The heated cooling water is driven to the second flow path of the second heat exchanger 1b by the first circulation pump 6. In the second flow path, the heated cooling water exchanges heat with a low-temperature refrigerant in the first flow path and is cooled. Then, the cooling water returns to the first heat dissipation path 110 to exchange heat with the battery pack. In this way, heat of the battery pack can be continuously dissipated through repeated circulation.

When the third circulation loop works, the first circulation loop may also work at the same time. In this case, the first circulation pump 6 drives cooling water to circulate in the third circulation loop. After entering the first heat dissipation path 110, high-temperature cooling water exchanges heat with the battery pack. After the cooling water transfers heat to the battery pack, a temperature decreases. The battery pack absorbs the heat of the cooling water, so that a temperature increases. The cooled cooling water is driven to the second flow path of the first heat exchanger 1a by the first circulation pump 6. In the second flow path, the cooled cooling water exchanges heat with a high-temperature refrigerant in the first flow path, and the temperature increases. Then, the cooling water returns to the first heat dissipation path 110 to exchange heat with the battery pack. In this way, the battery pack can be continuously heated through repeated circulation.

When the fourth circulation loop works, the first circulation loop may also work at the same time. The second circulation pump 7 drives cooling water to circulate in the fourth circulation loop. After entering the second heat dissipation path 120, low-temperature cooling water exchanges heat with the power assembly. After the cooling water absorbs heat of the power assembly, a temperature increases. The power assembly transfers the heat to the cooling water to be cooled. The heated cooling water is driven to the second flow path of the second heat exchanger 1b by the second circulation pump 7. In the second flow path, the heated cooling water exchanges heat with a low-temperature refrigerant in the first flow path and is cooled. Then, the cooling water returns to the second heat dissipation path 120 to exchange heat with the power assembly. In this way, heat of the power assembly can be continuously dissipated through repeated circulation.

It should be noted that, a working mode of the nine-way valve 5 is adjusted, so that the first circulation loop, the third circulation loop, and the fourth circulation loop can work at the same time. In this case, high-temperature cooling water in the fourth circulation loop transfers heat to a refrigerant in the first circulation loop in the second heat exchanger 1b. The refrigerant in the first circulation loop absorbs the heat and is driven to the first heat exchanger 1a by the compressor 2, and then transfers the heat to low-temperature cooling water in the third circulation loop in the first heat exchanger 1a. The cooling water in the third circulation loop absorbs the heat, and a temperature increases. Then, the cooling water is driven to the first heat dissipation path 110 of the battery pack by the first circulation pump 6 to exchange heat with the battery pack, to heat the battery pack. In other words, in this solution, heat generated when the power assembly works may be used to heat the battery pack, to fully use residual heat of the power assembly and reduce a waste of resources of the electric vehicle.

When the fifth circulation loop works, the second circulation pump 7 drives cooling water to circulate in the loop. Low-temperature cooling water enters the second heat dissipation path 120 to exchange heat with the power assembly. After the cooling water absorbs heat of the power assembly, a temperature increases. The power assembly transfers the heat to the cooling water to be cooled. The heated cooling water is driven to the heat sink 8 by the second circulation pump 7. After heat is dissipated, and the heated cooling water is cooled in the heat sink 8, the cooling water returns to the second heat dissipation path 120 to exchange heat with the power assembly. In this way, heat of the power assembly can be continuously dissipated through repeated circulation.

The foregoing descriptions are merely specific embodiments of this application, but are not intended to limit the protection scope of this application. Any variation or replacement readily figured out by a person skilled in the art within the technical scope disclosed in this application should fall within the protection scope of this application. Therefore, the protection scope of this application shall be subject to the protection scope of the claims.

## Claims

1. A heat exchanger, comprising a first flow collector, a second flow collector, and a heat exchange core, wherein
the first flow collector comprises a first chamber and a second chamber, the first chamber is in thermally conductive contact with the second chamber, the first chamber is provided with a plurality of first flow distribution openings, and the second chamber is provided with a plurality of second flow distribution openings;
the second flow collector comprises a third chamber and a fourth chamber, the third chamber is in thermally conductive contact with the fourth chamber, the third chamber is provided with a plurality of third flow distribution openings, and the fourth chamber is provided with a plurality of fourth flow distribution openings;
the heat exchange core comprises a plurality of heat exchange units disposed in parallel along a first direction, the plurality of heat exchange units are disposed between the first flow collector and the second flow collector, the heat exchange unit comprises one or more fins and one or more flow guiding members, the one or more flow guiding members form one or more first flow channels and one or more second flow channels, one end of the first flow channel is connected to the first flow distribution opening, the other end of the first flow channel is connected to the third flow distribution opening, one end of the second flow channel is connected to the second flow distribution opening, the other end of the second flow channel is connected to the fourth flow distribution opening, and an air intake side and an air exhaust side of the fin are disposed opposite to each other along a second direction; and
the first direction and the second direction are provided at an included angle.

2. The heat exchanger according to claim 1, wherein the end that is of the first flow channel and that is connected to the first flow distribution opening is a liquid inlet port, and the end that is of the first flow channel and that is connected to the third flow distribution opening is a liquid outlet port; and
the end that is of the second flow channel and that is connected to the fourth flow distribution opening is a liquid inlet port, and the end that is of the second flow channel and that is connected to the second flow distribution opening is a liquid outlet port.

3. The heat exchanger according to claim 1 or 2, wherein in each heat exchange unit, there are three flow guiding members and one fin; and
the three flow guiding members respectively form one first flow channel and two second flow channels, and along the first direction, the first flow channel is located between the two second flow channels, and the fin is located on a side that is of one of the second flow channels and that is away from the first flow channel.

4. The heat exchanger according to claim 1 or 2, wherein in each heat exchange unit, there are two flow guiding members and one fin; and
the two flow guiding members respectively form one first flow channel and one second flow channel, and the first flow channel, the second flow channel, and the fin are disposed in parallel along the first direction.

5. The heat exchanger according to claim 1 or 2, wherein in each heat exchange unit, there are two flow guiding members and two fins; and
the two flow guiding members respectively form one first flow channel and one second flow channel, and along the first direction, the first flow channel is located between the two fins, and the second flow channel is located on a side that is of one of the fins and that is away from the first flow channel.

6. The heat exchanger according to claim 1 or 2, wherein in each heat exchange unit, there are two flow guiding members and one fin; and
the two flow guiding members respectively form one first flow channel and one second flow channel, the two flow guiding members are disposed in parallel along the second direction to form a flow guiding component, and the flow guiding component and the fin are disposed in parallel along the first direction.

7. The heat exchanger according to any one of claims 3 to 6, wherein there is a first path, a second path, and a third path in the first flow channel, the first path and the second path are separately disposed along a third direction, the first path is connected to the first flow distribution opening, the second path is connected to the third flow distribution opening, the third path is disposed along the second direction, and two ends of the third path are respectively connected to the first path and the second path; and
the third direction is an arrangement direction of the first flow collector and the second flow collector.

8. The heat exchanger according to claim 7, wherein there are a plurality of third paths, and the plurality of third paths are disposed in parallel along the third direction.

9. The heat exchanger according to any one of claims 3 to 8, wherein there is a fourth path, a fifth path, and a sixth path in the second flow channel, the fourth path and the fifth path are separately disposed along the third direction, the fourth path is connected to the second flow distribution opening, the fifth path is connected to the fourth flow distribution opening, the sixth path is disposed along the second direction, and two ends of the sixth path are respectively connected to the fourth path and the fifth path; and
the third direction is the arrangement direction of the first flow collector and the second flow collector.

10. The heat exchanger according to claim 9, wherein there are a plurality of sixth paths, and the plurality of sixth paths are disposed in parallel along the third direction.

11. The heat exchanger according to claim 1 or 2, wherein in each heat exchange unit, there is one flow guiding member and one fin, and the flow guiding member and the fin are disposed in parallel along the first direction; and
one or more division plates are disposed inside the flow guiding member, the division plates divide the flow guiding member into at least one first flow channel and at least one second flow channel, and the at least one first flow channel and the at least one second flow channel are alternately arranged along the second direction.

12. The heat exchanger according to any one of claims 1 to 11, wherein the first chamber, the second chamber, the third chamber, and the fourth chamber are separately provided with an opening configured to communicate with the outside.

13. The heat exchanger according to any one of claims 1 to 11, wherein one of the first chamber and the third chamber is provided with two openings configured to communicate with the outside, and one of the second chamber and the fourth chamber is provided with two openings configured to communicate with the outside.

14. The heat exchanger according to claim 13, wherein a first baffle plate is disposed in a chamber that is one of the first chamber and the third chamber and that is provided with two openings, the first baffle plate divides the first chamber or the third chamber into two first sub-chambers, and the two openings of the first chamber or the third chamber are respectively configured for the two first sub-chambers to communicate with the outside; and
a second baffle plate is disposed in a chamber that is one of the second chamber and the fourth chamber and that is provided with two openings, the second baffle plate divides the second chamber or the fourth chamber into two second sub-chambers, and the two openings of the second chamber or the fourth chamber are respectively configured for the two second sub-chambers to communicate with the outside.

15. The heat exchanger according to any one of claims 1 to 14, wherein the first chamber is disposed in the second chamber, the second chamber has a first side wall disposed toward the second flow collector, the first side wall is provided with a first through hole at a position corresponding to the first flow channel, and one end of the first flow channel passes through the first through hole and is connected to the first flow distribution opening; and
the third chamber is disposed in the fourth chamber, the fourth chamber has a second side wall disposed toward the first flow collector, the second side wall is provided with a second through hole at a position corresponding to the first flow channel, and the other end of the first flow channel passes through the second through hole and is connected to the third flow distribution opening.

16. The heat exchanger according to any one of claims 1 to 14, wherein the first chamber and the second chamber are disposed in parallel along the second direction, and the third chamber and the fourth chamber are disposed in parallel along the second direction.

17. The heat exchanger according to claim 16, wherein along the third direction, the first chamber and the fourth chamber are disposed opposite to each other, and the second chamber and the third chamber are disposed opposite to each other; and
the third direction is the arrangement direction of the first flow collector and the second flow collector.

18. The heat exchanger according to any one of claims 1 to 17, wherein two ends of the flow guiding member configured to form the first flow channel are respectively welded to the first flow distribution opening and the third flow distribution opening, and two ends of the flow guiding member configured to form the second flow channel are respectively welded to the second flow distribution opening and the fourth flow distribution opening.

19. The heat exchanger according to any one of claims 1 to 18, wherein the first flow channel is a refrigerant flow channel, and the second flow channel is a water flow channel.

20. A vehicle-mounted heat management system, comprising a compressor, an expansion valve, and the heat exchanger according to any one of claims 1 to 19, wherein there are two heat exchangers, which are respectively a first heat exchanger and a second heat exchanger, and each heat exchanger comprises a first flow path formed by the first chamber, the first flow channel, and the third chamber, and a second flow path formed by the second chamber, the second flow channel, and the fourth chamber, wherein
the compressor, a first flow path of the first heat exchanger, the expansion valve, and a first flow path of the second heat exchanger are sequentially connected to form a circulation loop; and
a passenger compartment of an electric vehicle has an internal air intake vent and an internal air exhaust vent, an air intake side of a fin of the first heat exchanger communicates with the internal air intake vent, an air exhaust side of the fin of the first heat exchanger communicates with the internal air exhaust vent, an air intake side of a fin of the second heat exchanger communicates with the internal air intake vent, and an air exhaust side of the fin of the second heat exchanger communicates with the internal air exhaust vent.

21. The vehicle-mounted heat management system according to claim 20, further comprising a first circulation pump, wherein
the electric vehicle comprises a battery pack, the battery pack has a first heat dissipation path, and the first circulation pump, the first heat dissipation path, and a second flow path of the second heat exchanger are sequentially connected to form a circulation loop.

22. The vehicle-mounted heat management system according to claim 20 or 21, further comprising a second circulation pump, wherein
the electric vehicle comprises a power assembly, the power assembly has a second heat dissipation path, and the second circulation pump, the second heat dissipation path, and the second flow path of the second heat exchanger are sequentially connected to form a circulation loop.

23. The vehicle-mounted heat management system according to any one of claims 20 to 22, wherein the passenger compartment of the electric vehicle further has an external air intake vent; and
the air intake side of the fin of the first heat exchanger and the air intake side of the fin of the second heat exchanger further separately communicate with the external air intake vent.

24. An electric vehicle, comprising the vehicle-mounted heat management system according to any one of claims 20 to 23, wherein the vehicle-mounted heat management system is capable of being configured to cool or heat a passenger compartment of the electric vehicle.
